# EUROPEAN PATENT APPLICATION

(11) **EP 4 760 497 A1**
(43) Date of publication of application: **17.06.2026**
(21) Application number: 24850835.0
(22) Date of filing: 29.07.2024
(51) Int. Cl.: G06F 9/451

(54) **METHOD AND APPARATUS FOR CREATING DIALOGUE PAGE, AND COMPUTER DEVICE AND STORAGE MEDIUM**

(30) Priority: 07.08.2023 CN 202310987776
(71) Applicant: Beijing Zitiao Network Technology Co., Ltd., Beijing 100190 (CN)
(72) Inventor: ZHENG, Ziyang, Beijing 100028 (CN); WANG, Daoyu, Beijing 100028 (CN); SUN, Hui, Beijing 100028 (CN); ZHAO, Jiayi, Beijing 100028 (CN)
(74) Representative: Grünecker Patent- und Rechtsanwälte PartG mbB
(86) International application number: PCT/CN2024/108116
(87) International publication number: WO 2025/031187

(57) **Abstract**

Provided in the present disclosure are a method and apparatus for creating a dialogue page, and a computer device and a storage medium. The method comprises: in response to a selection operation for dialogue content presented on a first dialogue page, determining first dialogue content selected under the selection operation; in response to the determination of creating a dialogue page for the first dialogue content, on the basis of the first dialogue content, determining a subject name corresponding to a second dialogue page to be created; and presenting the created second dialogue page, wherein the subject name is presented in a subject display region of the second dialogue page.

## Description

The present application claims priority to Chinese Patent Application No. 202310987776.6 filed on August 7, 2023, which is hereby incorporated by reference in its entirety.

### TECHNICAL FIELD

The present disclosure relates to a method and an apparatus for creating a dialogue page, a computer device, and a storage medium.

### BACKGROUND

With the artificial intelligence technology, a reply to answer a question raised by a user may be provided. The user may have a dialogue and ask a question in a dialogue page. In the dialogue page, the user may focus on a plurality of different topics, and for dialogue content under a certain topic in which the user is interested, the user may select to create a new dialogue page by himself/herself, and ask a question and answer the question for the topic in the dialogue page. In this manner, the user needs to create a new dialogue page by himself/herself, and re-provide information related to the topic of interest in the new dialogue page, which is not convenient to operate and is low in efficiency.

### SUMMARY

The embodiments of the present disclosure at least provide a method and an apparatus for creating a dialogue page, a computer device, and a storage medium.

In a first aspect, an embodiment of the present disclosure provides a method for creating a dialogue page, including: determining first dialogue content selected by the selection operation in response to the selection operation for dialogue content displayed in a first dialogue page; determining a topic name corresponding to a to-be-created second dialogue page based on the first dialogue content in response to determining to create the dialogue page for the first dialogue content; and displaying the created second dialogue page, where the topic name is displayed in a topic display area of the second dialogue page.

In an optional implementation, displaying the created second dialogue page includes: displaying the first dialogue content in the second dialogue page; or displaying the first dialogue content and second dialogue content in the second dialogue page, where the second dialogue content is dialogue content, in each dialogue content in the first dialogue page, that is in a contextual association with the first dialogue content.

In an optional implementation, determining the topic name corresponding to the to-be-created second dialogue page based on the first dialogue content includes: determining, in the each dialogue content in the first dialogue page, second dialogue content that is in the contextual association with the first dialogue content; and determining the topic name based on the first dialogue content and the second dialogue content.

In an optional implementation, determining the topic name corresponding to the to-be-created second dialogue page based on the first dialogue content includes: determining at least one candidate topic name based on a plurality of the first dialogue contents in response to including a plurality of the first dialogue contents; determining whether the at least one candidate topic name belongs to a equal target vertical category, where the target vertical category includes at least one hierarchy indicating an inclusion relationship, and candidate topic names matching the respective hierarchies are different; and determining, in response to the at least one candidate topic name belonging to the equal target vertical category, a hierarchy matching respectively each of the candidate topic names under the target vertical category, and determining a target hierarchy based on each matched hierarchy, to determine the topic name based on a candidate topic name and/or a hierarchy name corresponding to the target hierarchy.

In an optional implementation, the method further includes: determining a plurality of vertical categories to which the at least one candidate topic name belongs and a content proportion corresponding to a candidate topic name under the each vertical category in response to the at least one candidate topic name not belonging to the equal target vertical category; and combining a vertical category name corresponding to the each vertical category based on the content proportion corresponding to the each vertical category, to obtain the topic name.

In an optional implementation, after creating the second dialogue page, the method further includes: displaying a dialogue thumbnail corresponding to the first dialogue page and a dialogue thumbnail corresponding to the second dialogue page in a dialogue list page, and displaying first identification information corresponding to the first dialogue page in the dialogue thumbnail corresponding to the second dialogue page.

In an optional implementation, the method further includes: displaying second identification information of the second dialogue page in a display area, in the first dialogue page, that is associated with the first dialogue content; and jumping to and displaying the second dialogue page in response to a trigger operation for the second identification information in the first dialogue page.

In a second aspect, an embodiment of the present disclosure further provides an apparatus for creating a dialogue page, including: a first determining module, configured to determine first dialogue content selected by the selection operation in response to the selection operation for dialogue content displayed in a first dialogue page; a second determining module, configured to determine a topic name corresponding to a to-be-created second dialogue page based on the first dialogue content in response to determining to create the dialogue page for the first dialogue content; and a displaying module, configured to display the created second dialogue page, where the topic name is displayed in a topic display area of the second dialogue page.

In an optional implementation, the displaying module, when displaying the created second dialogue page, is configured to: display the first dialogue content in the second dialogue page; or display the first dialogue content and second dialogue content in the second dialogue page, where the second dialogue content is dialogue content, in each dialogue content in the first dialogue page, that is in a contextual association with the first dialogue content.

In an optional implementation, the second determining module, when determining the topic name corresponding to the to-be-created second dialogue page based on the first dialogue content, is configured to: determine, in the each dialogue content in the first dialogue page, second dialogue content that is in the contextual association with the first dialogue content; and determine the topic name based on the first dialogue content and the second dialogue content.

In an optional implementation, the second determining module, when determining the topic name corresponding to the to-be-created second dialogue page based on the first dialogue content, is configured to: determine at least one candidate topic name based on a plurality of the first dialogue contents in response to including a plurality of the first dialogue contents; determine whether the at least one candidate topic name belongs to a equal target vertical category, where the target vertical category includes at least one hierarchy indicating an inclusion relationship, and candidate topic names matching the respective hierarchies are different; and determine, in response to the at least one candidate topic name belonging to the equal target vertical category, a hierarchy matching respectively each of the candidate topic names under the target vertical category, and determine a target hierarchy based on each matched hierarchy, to determine the topic name based on a candidate topic name and/or a hierarchy name corresponding to the target hierarchy.

In an optional implementation, the second determining module is further configured to: determine a plurality of vertical categories to which the at least one candidate topic name belongs and a content proportion corresponding to a candidate topic name under the each vertical category in response to the at least one candidate topic name not belonging to the equal target vertical category; and combine a vertical category name corresponding to the each vertical category based on the content proportion corresponding to the each vertical category, to obtain the topic name.

In an optional implementation, after creating the second dialogue page, the second determining module is further configured to: display a dialogue thumbnail corresponding to the first dialogue page and a dialogue thumbnail corresponding to the second dialogue page in a dialogue list page, and display first identification information corresponding to the first dialogue page in the dialogue thumbnail corresponding to the second dialogue page.

In an optional implementation, the apparatus further includes a processing module, configured to: display second identification information of the second dialogue page in a display area, in the first dialogue page, that is associated with the first dialogue content; and jump to and display the second dialogue page in response to a trigger operation for the second identification information in the first dialogue page.

In a third aspect, an optional implementation of the present disclosure further provides a computer device, including a processor and a memory, where the memory stores machine-readable instructions executable by the processor, the processor is configured to execute the machine-readable instructions stored in the memory, and when the machine-readable instructions are executed by the processor, the steps in the first aspect or any possible implementation of the first aspect are executed.

In a fourth aspect, an optional implementation of the present disclosure further provides a computer-readable storage medium, where the computer-readable storage medium is stored thereon with a computer program, and when the computer program is run, the steps in the first aspect or any possible implementation of the first aspect are executed.

### BRIEF DESCRIPTION OF DRAWINGS

In order to illustrate the technical solutions of the embodiments of the present disclosure more clearly, the following briefly introduces the drawings required for describing the embodiments. The drawings are incorporated in and constitute a part of this specification, and the drawings illustrate embodiments consistent with the present disclosure and, together with the specification, are used to explain the technical solutions of the present disclosure. It should be understood that the following drawings illustrate only some embodiments of the present disclosure, and therefore should not be regarded as limiting the scope, and those of ordinary skill in the art can still derive other related drawings from these drawings without creative efforts.
FIG. 1 is a flowchart of a method for creating a dialogue page according to an embodiment of the present disclosure;
FIG. 2 is a schematic diagram of a dialogue page according to an embodiment of the present disclosure;
FIG. 3 is a schematic diagram of selecting first dialogue content according to an embodiment of the present disclosure;
FIG. 4 is a schematic diagram of a plurality of hierarchies under a target vertical category according to an embodiment of the present disclosure;
FIG. 5 is a schematic diagram of a second dialogue page according to an embodiment of the present disclosure;
FIG. 6 is a schematic diagram of a dialogue list page according to an embodiment of the present disclosure;
FIG. 7 is a schematic diagram of displaying second identification information in a first dialogue page according to an embodiment of the present disclosure;
FIG. 8 is a specific schematic diagram of an apparatus for creating a dialogue page according to an embodiment of the present disclosure; and
FIG. 9 is a schematic diagram of a computer device according to an embodiment of the present disclosure.

### DETAILED DESCRIPTION

In order to make the objectives, technical solutions and advantages of the embodiments of the present disclosure clearer, the technical solutions in the embodiments of the present disclosure will be described clearly and completely below with reference to the drawings in the embodiments of the present disclosure. Obviously, the described embodiments are only a part of the embodiments of the present disclosure, but not all of the embodiments. The components of the embodiments of the present disclosure described and illustrated herein may be arranged and designed in various different configurations. Therefore, the following detailed description of the embodiments of the present disclosure is not intended to limit the scope of the claimed present disclosure, but merely represents selected embodiments of the present disclosure. Based on the embodiments of the present disclosure, all other embodiments obtained by those skilled in the art without creative efforts shall fall within the protection scope of the present disclosure.

It is found through research that when a question is asked and answered by using the artificial intelligence technology, the user may focus on a plurality of different topics to have a dialogue and ask a question. For the user, there may be a need to focus on one of the topics to ask a question and answer the question. In this case, the user needs to create a new dialogue page by himself/herself, and then re-ask the question and answer the question for the topic in the new dialogue page. **In** this manner, the user needs to create a new dialogue page by himself/herself, and re-provide information related to the topic of interest in the new dialogue page, which is not convenient to operate and is low in efficiency.

Based on the above research, the present disclosure provides a method for creating a dialogue page. In an original first dialogue page, the user can directly create a new second dialogue page by selecting first dialogue content, so as to continue to ask a question and answer the question for the topic indicated by the first dialogue content in the second dialogue page. In this way, there is no need for the user to create a new dialogue page by himself/herself, and a new dialogue page can be created only by selecting existing dialogue content. In addition, for the created second dialogue page, the corresponding topic name is determined according to the first dialogue content, so that the topic of the content that the user is interested in can be marked, which is convenient for the user to view.

Further, in the second dialogue page, the first dialogue content selected from the first dialogue page may be displayed, or second dialogue content that is in a contextual association with the first dialogue content may be displayed, so that the user can continue to have a dialogue on the basis of the dialogue content in the second dialogue page, without re-importing the content into the new second dialogue page by means of copying and pasting, etc., and the operation is more convenient.

The defects in the above solutions are all results obtained by the inventors after practice and careful study. Therefore, the discovery process of the above problems and the solutions proposed by the present disclosure in the following for the above problems should be contributions of the inventors to the present disclosure in the disclosure process of the present disclosure.

It should be noted that similar reference numerals and letters in the following drawings represent similar items. Therefore, once an item is defined in one drawing, it is not necessary to further define and interpret it in subsequent drawings.

In order to facilitate understanding of the embodiment, a method for creating a dialogue page disclosed in an embodiment of the present disclosure is first described in detail. The execution body of the method for creating a dialogue page provided in the embodiment of the present disclosure is generally a computer device with a certain computing capability. The computer device includes, for example, a terminal device, a server, or other processing devices. The terminal device may be a user equipment (User Equipment, UE), a mobile device, a user terminal, a terminal, a cellular phone, a cordless phone, a personal digital assistant (Personal Digital Assistant, PDA), a handheld device, a computing device, a vehicle-mounted device, a wearable device, etc. In some possible implementations, the method for creating a dialogue page may be implemented by the processor calling computer-readable instructions stored in the memory.

The method for creating a dialogue page provided in the embodiment of the present disclosure is described below. The method for creating a dialogue page provided in the embodiment of the present disclosure may be specifically applied to a platform that completes dialogue and question answering by relying on an artificial intelligence model. In the platform, the content input by the user and the reply content replied by the artificial intelligence model according to the content input by the user are presented in the form of a dialogue page. In the platform, a plurality of dialogue pages may be created specifically. In one dialogue page, a dialogue may be performed for a single topic, or a dialogue may be performed by integrating a plurality of different topics. Different from the existing method for creating a dialogue page: under the existing method for creating a dialogue page, only the user can be supported to create a new dialogue page by himself/herself, while in the embodiment of the present disclosure, a new second dialogue page may be created by selecting first dialogue content in the original first dialogue page.

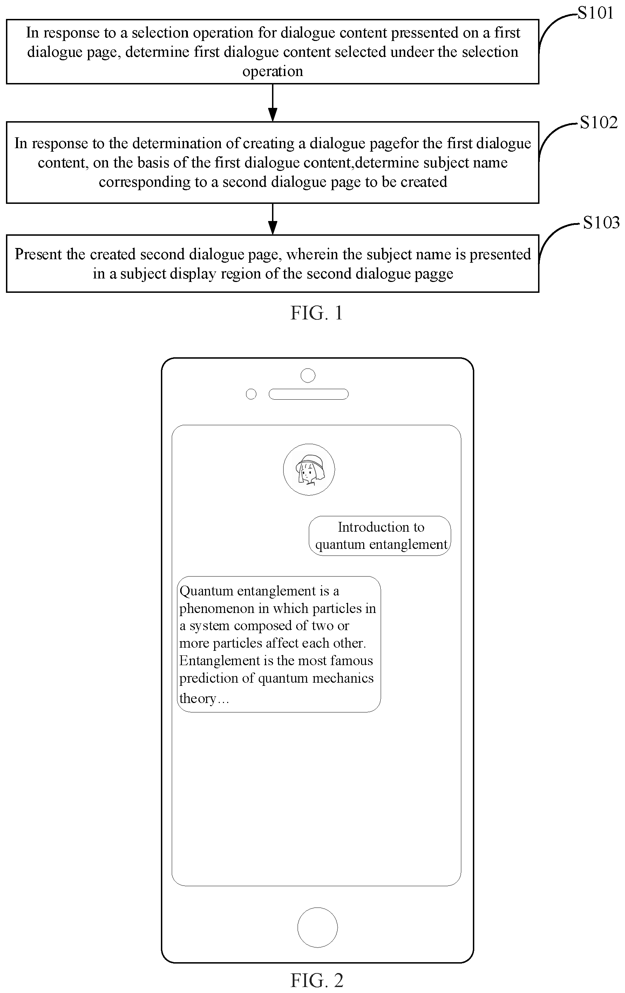

Referring to FIG. 1, it is a flowchart of a method for creating a dialogue page according to an embodiment of the present disclosure. The method includes steps S101-S103.

In S101, determining, in response to a selection operation for a dialogue content displayed in a first dialogue page, first dialogue content selected by the selection operation.

In S102, determining, based on the first dialogue content, a topic name corresponding to a to-be-created second dialogue page, in response to determining to create the dialogue page for the first dialogue content.

In S103, displaying the created second dialogue page, wherein the topic name is displayed in a topic display area of the second dialogue page.

Regarding the above S101, first, the dialogue page provided in the embodiment of the present disclosure is described. The dialogue page provided in the embodiment of the present disclosure is presented in the form of a page. In the dialogue page, the user may input content such as a voice, a text, an image, and a video or raise a specific question to have a dialogue, and the artificial intelligence model may reply through information sent by the user. Therefore, in the dialogue page, specifically, the user and the artificial intelligence model may have a dialogue by means of information. Exemplarily, referring to FIG. 2, it is a schematic diagram of a dialogue page according to an embodiment of the present disclosure. In the dialogue page in the schematic diagram, the right side is information input by the user, specifically including a question asked; and the left side is an answer replied by the artificial intelligence model one by one according to the information input by the user. Here, both the question asked by the user and the answer replied by the artificial intelligence model may be regarded as dialogue content in the dialogue page.

For the dialogue content in the dialogue page, in a possible scenario, when there is a plurality of pieces of dialogue content in one dialogue page, the user may have some dialogue content that he/she focuses on in the dialogue content, and specifically have a dialogue separately according to this part of dialogue content. For example, in a plurality of historical dialogues, after asking a question related to a sports event, the user continues to ask other questions which are not related to the sports event, such as diet, but still has a need to subsequently ask a question about the sports event, and therefore, a new dialogue page about the sports event needs to be created.

Alternatively, in another possible scenario, when a dialogue for a certain topic is gradually performed in one dialogue page, for example, the user first asks a question related to a sports event and then asks a question about a player therein. Similarly, the user may have a need to focus on continuing to ask a question about the sports event or the player, and therefore, may select to create a dialogue page.

Alternatively, in yet another possible scenario, when reviewing historical dialogue content of the dialogue page, the user finds the historical dialogue content that he/she is interested in, and may create a new dialogue page according to the historical dialogue content that he/she is interested in, so as not to interfere with the dialogue content currently in progress in the current dialogue page.

Therefore, in the embodiment of the present disclosure, for the dialogue content in one dialogue page, the user may select to create a new dialogue page for it and continue to have a dialogue for the dialogue content in the new dialogue page. Here, in order to distinguish, the dialogue page in which the dialogue content originally exists is referred to as a first dialogue page, and the to-be-created new dialogue page is referred to as a second dialogue page.

In specific implementation, in the first dialogue page, specifically, the first dialogue content selected by the selection operation may be determined in response to the selection operation for the dialogue content displayed in the first dialogue page.

Here, the user may select the dialogue content that he/she is interested in or pays more attention to from the dialogue content displayed in the first dialogue page, as illustrated in the above example, and the selected dialogue content is referred to as the first dialogue content in the embodiment of the present disclosure. One or more pieces of the first dialogue content may be selected, and the dialogue content displayed in the first dialogue page in a recent time period may be selected, or the dialogue content displayed earlier may be browsed out.

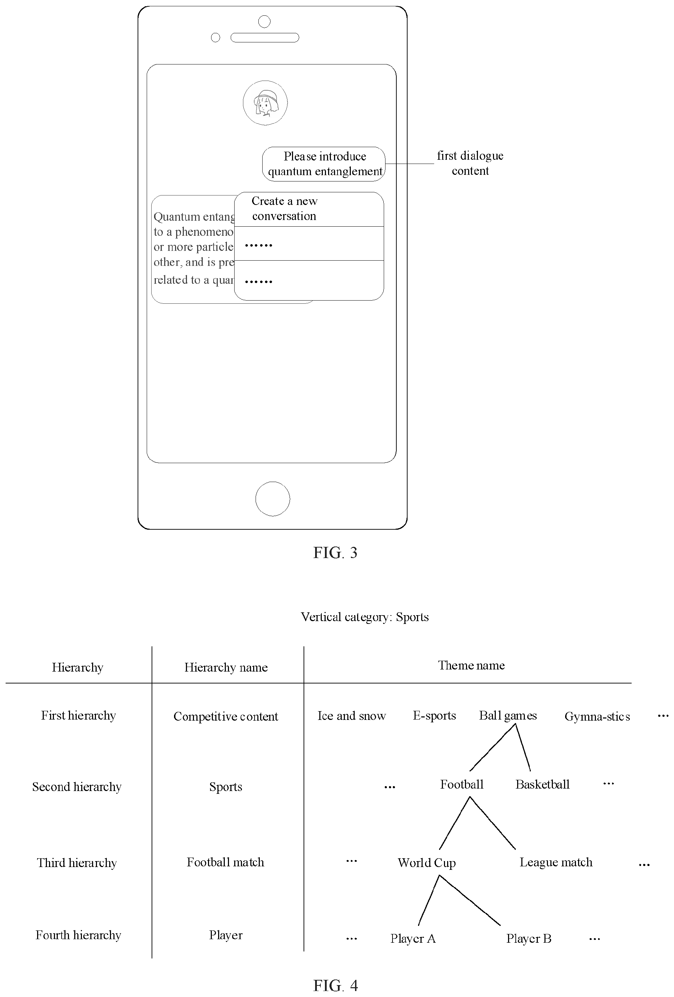

Exemplarily, referring to FIG. 3, it is a schematic diagram of selecting first dialogue content according to an embodiment of the present disclosure. In the embodiment of the present disclosure, for the convenience of operation, specifically, one or more pieces of the first dialogue content may be selected through a trigger operation such as long pressing or double clicking, and a prompt box including "create new dialogue" is popped up. When the user continues to select an option of triggering "create new dialogue", it is determined to create the dialogue page for the first dialogue content.

Regarding the above S102, in the case where it is determined to create the dialogue page for the selected first dialogue content, in order to facilitate distinguishing between different dialogue pages, in the embodiment of the present disclosure, the corresponding topic name is determined for the newly created second dialogue page. Here, since the second dialogue page is created by the user for the selected first dialogue content, the topic name of the second dialogue page may be determined according to the first dialogue content.

In a possible case, only one piece of the selected first dialogue content may be included. For example, in FIG. 3, only the dialogue content "introduce quantum entanglement" asked by the user is selected as the first dialogue content. In this case, at least one keyword may be determined from the dialogue content, and it is determined that the obtained at least one keyword indicates a topic name, which is used as the topic name corresponding to the to-be-created second dialogue page. For example, "introduce quantum entanglement" specifically includes keywords "introduce" and "quantum entanglement", and the semantics of "introduce" is to describe "quantum entanglement", so the topic name indicated by the two is "quantum entanglement", and "quantum entanglement" is used as the topic name corresponding to the second dialogue page.

Here, when the selected first dialogue content contains less information, it may occur that the topic name determined by using the selected single piece of first dialogue content is unclear or inaccurate. For example, when the first dialogue content only selects the first dialogue content replied by the user, such as "yes" and "I select the second one", the topic name indicating the specific topic cannot be obtained. Therefore, in this case, in the embodiment of the present disclosure, specifically, the second dialogue content that is in the contextual association with the first dialogue content is determined from the each dialogue content in the first dialogue page, and then the topic name is determined based on the first dialogue content and the second dialogue content.

Exemplarily, in the dialogue content about the psychological test, the artificial intelligence model may ask the user a psychological test question and a plurality of possible options under the test question, and after viewing the options, the reply information of the user includes, for example, "I select the second one" in the above example. When the user selects "I select the second one" as the first dialogue content, the first dialogue content actually also contains semantic information corresponding to the test question that is in the contextual association. Therefore, the second dialogue content that is in the contextual association with the first dialogue content may be determined from each dialogue content in the first dialogue page.

Here, in the example related to the psychological test question, the second dialogue content that is in the contextual association with the first dialogue content specifically refers to the dialogue content displayed adjacently and displayed in the form of the test question, but in the embodiment of the present disclosure, the second dialogue content may also include the dialogue information generated and displayed earlier, which is not limited here. For example, when a dialogue is previously performed for sports, then a dialogue is performed for rehabilitation training, and a dialogue related to a sports theme is currently performed again, for the first dialogue content currently selected under the sports theme, when there is dialogue content that is in the contextual association with the currently selected first dialogue content in the dialogue content previously for the sports, the dialogue content may also be used as the second dialogue content.

When determining the topic name according to the first dialogue content and the second dialogue content, since the first dialogue content and the second dialogue content are in the contextual association, the two may contain the equal keyword, such as "quantum entanglement" described above, or a feature word indicating the equal semantic information, such as "quantum entanglement" and "quantum tangling", and the "quantum entanglement" determined by the former may be specifically used as the topic name, or one of the latter may be selected as the topic name.

In another possible case, a plurality of pieces of the selected first dialogue content may also be included. In the case where a plurality of the first dialogue contents are selected, the plurality of the first dialogue contents may belong to the equal vertical category, for example, both belong to sports; or may belong to different vertical categories, for example, the plurality of the first dialogue contents relate to both sports and rehabilitation treatment. In these two different cases, the manner of determining the topic name is also different.

Here, the vertical category may be divided by a concept involving a relatively wide range of content, such as a field and the like. For example, the vertical category may specifically include sports, diet, social science, humanities, and the like. The vertical category may be predetermined, or may be determined in real time and dynamically, which is not limited here.

In order to distinguish between these two different cases, in the embodiment of the present disclosure, at least one candidate topic name may be determined based on the plurality of the first dialogue contents, and whether the at least one candidate topic name belongs to the equal target vertical category is determined. Specifically, the target vertical category includes at least one hierarchy indicating an inclusion relationship, and candidate topic names matching the respective hierarchies are different.

Here, taking the vertical category including sports as an example, the concept of the hierarchy is described. According to the above description, the vertical category is a concept division involving a wide range of content, and therefore, a plurality of hierarchies included in the vertical category may be determined by taking the vertical category as the head. Exemplarily, for the vertical category of sports, a first hierarchy thereunder may specifically indicate a plurality of different sports competition contents, such as e-sports, ball games, gymnastics, ice and snow, and the like; taking the ball games in the first hierarchy as an example, when a second hierarchy continues to be divided, the second hierarchy may include specific sports events, such as football, basketball, badminton, and the like; taking the football in the second hierarchy as an example, when a third hierarchy continues to be divided, the third hierarchy may include competition events, such as a World Cup, a league, and the like; and taking the World Cup in the third hierarchy as an example, when a fourth hierarchy continues to be divided, the fourth hierarchy may specifically include players, such as player A, player B, and the like. A specific schematic diagram is shown in FIG. 4, for example. In the example, the hierarchies, the hierarchy names, and the topic names under the vertical category are presented in the form of examples. There is an inclusion relationship between the respective hierarchies here. Only a part of topic names are listed in the form of examples under the topic name, and only one example of the corresponding hierarchy name is shown by taking the football as an example. The connection between "ball games" and "football" and the connection between other topic names at different hierarchies may specifically indicate an inclusion relationship between upper and lower hierarchies.

The following is described by way of examples.

In an example, the first dialogue content may specifically include two pieces, which are a: "introduce the World Cup" and b: "football player A", respectively. For the two different pieces of first dialogue content, at least one candidate topic name may be determined. For example, for the first dialogue content a and b listed in the above example, it may be determined that the candidate topic names are "World Cup" and "player A", respectively.

Here, for the two pieces of first dialogue content in the above example, the corresponding candidate topic name is determined for each piece of first dialogue content. In a possible case, the candidate topic names corresponding to the plurality of pieces of first dialogue content may also be the same. For example, when the two pieces of first dialogue content both focus on "quantum entanglement", the candidate topic names corresponding to the two pieces of first dialogue content are both "quantum entanglement". That is, for the determined plurality of pieces of first dialogue content, the determined candidate topic names may be consistent with the number of pieces of first dialogue content. For example, each piece of first dialogue content is matched with one candidate topic name, or the number of the determined candidate topic names may also be less than the number of pieces of first dialogue content. For example, the candidate topic names corresponding to the two pieces of first dialogue content in the above example are the same.

Continuing with the above example, for the candidate topic name "World Cup" corresponding to the first dialogue content a and the candidate topic name "player A" corresponding to the first dialogue content b, it may be determined, through the plurality of hierarchies under the target vertical category shown in FIG. 4, that the two candidate topic names belong to the equal target vertical category "sports". In the case where it is determined that the two candidate topic names belong to the equal target vertical category, the target hierarchy may be determined based on the respective hierarchies matching the two candidate topic names, to determine the topic name based on the candidate topic name and/or the hierarchy name corresponding to the target hierarchy.

For example, according to the plurality of hierarchies shown in FIG. 4, it may be determined that the candidate topic name "World Cup" belongs to a third hierarchy, and the candidate topic name "player A" belongs to a fourth hierarchy. When determining the target hierarchy from the third hierarchy and the fourth hierarchy, a higher hierarchy is selected, that is, a hierarchy including more lower hierarchies. **In** this way, the selected target hierarchy may completely summarize the plurality of candidate topic names. Specifically, for example, for the candidate topic name "World Cup" corresponding to the higher hierarchy, when it is used as the topic name, the candidate topic name "player A" corresponding to the lower hierarchy may be covered, while when the candidate topic name "player A" is selected as the topic name, the candidate topic name "World Cup" corresponding to the higher hierarchy cannot be covered.

In the above case, since the two matching hierarchies are the third hierarchy and the fourth hierarchy, respectively, a higher hierarchy is selected as the target hierarchy, and the candidate topic name corresponding to the target hierarchy may be directly selected and determined as the topic name. In another possible case, the highest hierarchy in the respective hierarchies may be the same. For example, the determined candidate topic names are "World Cup" and "league", which both correspond to the third hierarchy in FIG. 4.

In this case, in a possible implementation, an upper hierarchy corresponding to the highest hierarchy may be determined as the target hierarchy, for example, the second hierarchy in FIG. 4, and a candidate topic name that can be determined under the second hierarchy is used as the topic name, for example, "football". Alternatively, the third hierarchy may also be directly used as the target hierarchy, and the hierarchy name "football match" corresponding to the third hierarchy is used as the topic name.

In this way, compared with directly using the name of the vertical category as the topic name, the topic name selected in the above manner is closer to the specific content indicated by the selected first dialogue content, and it is easier to clearly mark the dialogue topic of the second dialogue page.

In another example, in addition to the above a and b, the selected first dialogue content further includes the first dialogue content c: "treatment of knee joint injury", and its corresponding candidate topic name "injury treatment" specifically belongs to a vertical category such as "medical treatment". In this case, for the first dialogue content a, b, c, the three different candidate topic names determined do not belong to the equal vertical category.

In this case, the plurality of vertical categories to which the at least one candidate topic name belongs and the content proportion corresponding to the candidate topic name under each vertical category may be determined specifically; and the vertical category name corresponding to each vertical category is combined based on the content proportion corresponding to each vertical category, to obtain the topic name.

Here, it may be considered that more dialogue content selected under the vertical category is the part that the user pays more attention to, and the content that the user pays attention to covers a wide range and should be displayed simultaneously. Therefore, for the plurality of determined vertical categories, the content proportion corresponding to the candidate topic name under each vertical category may be determined, for example, according to the number of pieces or the amount of information in the dialogue content. Exemplarily, for the above first dialogue content a, b, c, the number of pieces under the sports vertical category is 2, and the number of pieces under the injury treatment vertical category is 1. It is determined that the content proportion of the first dialogue content under the sports is higher. Therefore, when combining and determining the topic name, the vertical category name corresponding to the sports is displayed in the front, the vertical category name corresponding to the injury treatment is displayed in the rear, and the topic names such as "sports and injury treatment" are combined and obtained.

In this way, in the different scenarios described above, the topic name corresponding to the to-be-created second dialogue page may be determined by using the selected first dialogue content.

Regarding the above S103, after selecting to create the second dialogue page and determining the topic name of the second dialogue page, the created second dialogue page may be displayed, and the topic name is displayed in the topic display area of the second dialogue page.

In the second dialogue page, in addition to the determined topic name, the selected first dialogue content in the first dialogue page may also be displayed. In this way, it is equivalent to importing the selected first dialogue content into the second dialogue page.

In another possible case, when there is also second dialogue content that is in a contextual association with the selected first dialogue content in the first dialogue page, both the first dialogue content and the second dialogue content may also be imported into the second dialogue page for display.

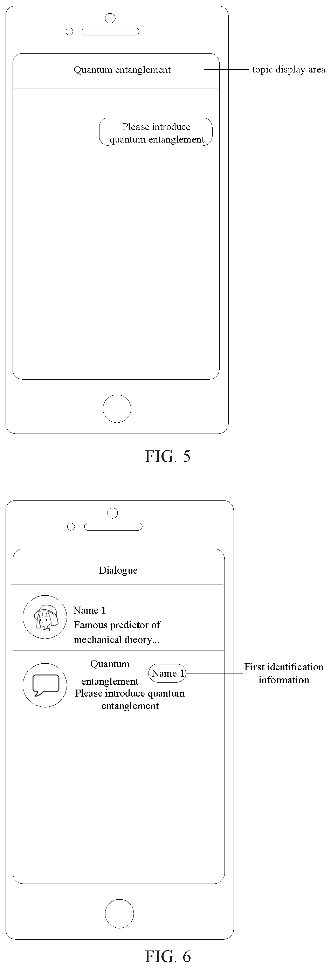

Exemplarily, referring to FIG. 5, it is a schematic diagram of a second dialogue page according to an embodiment of the present disclosure. For the first dialogue content selected in FIG. 3, the topic name determined for the newly created second dialogue page is "quantum entanglement", and therefore, in the second dialogue page in FIG. 5, the topic name of "quantum entanglement" is marked in the topic display area. In addition, only the selected first dialogue content is displayed in the second dialogue page.

In another embodiment of the present disclosure, in addition to being displayed in the form of a completely displayed page, the first dialogue page and the second dialogue page may also be displayed in the form of a dialogue thumbnail through a list. Here, since the second dialogue page is created for the first dialogue content in the first dialogue page, the second dialogue page is associated with the first dialogue page.

In order to reflect the association, in a possible case, in a dialogue list page, a dialogue thumbnail corresponding to the first dialogue page and a dialogue thumbnail corresponding to the second dialogue page may be displayed specifically, and first identification information corresponding to the first dialogue page is displayed in the dialogue thumbnail corresponding to the second dialogue page.

Exemplarily, referring to FIG. 6, it is a schematic diagram of a dialogue list page according to an embodiment of the present disclosure. A dialogue thumbnail corresponding to the first dialogue page and a dialogue thumbnail corresponding to the second dialogue page are displayed specifically. In the dialogue thumbnail of the first dialogue page, a topic name under the first dialogue page is displayed in the form of an example, which is "name 1". In the second dialogue page, in order to reflect an association relationship between the second dialogue page and the first dialogue page, the topic name "quantum entanglement" and the first identification information corresponding to the first dialogue page are displayed specifically, for example, the topic name of the first dialogue page is displayed in the form of an icon. The dialogue thumbnail may further include an icon in the corresponding dialogue page, the latest piece of dialogue content, or the like, which is not limited here.

For the original first dialogue page, in order to prompt the user, when browsing the dialogue content therein, that the first dialogue page contains the first dialogue content that is selected and associated to create the second dialogue page, and different first dialogue pages are associated with different second dialogue pages, in the embodiment of the present disclosure, the second identification information of the second dialogue page is displayed in the display area, in the first dialogue page, that is associated with the first dialogue content.

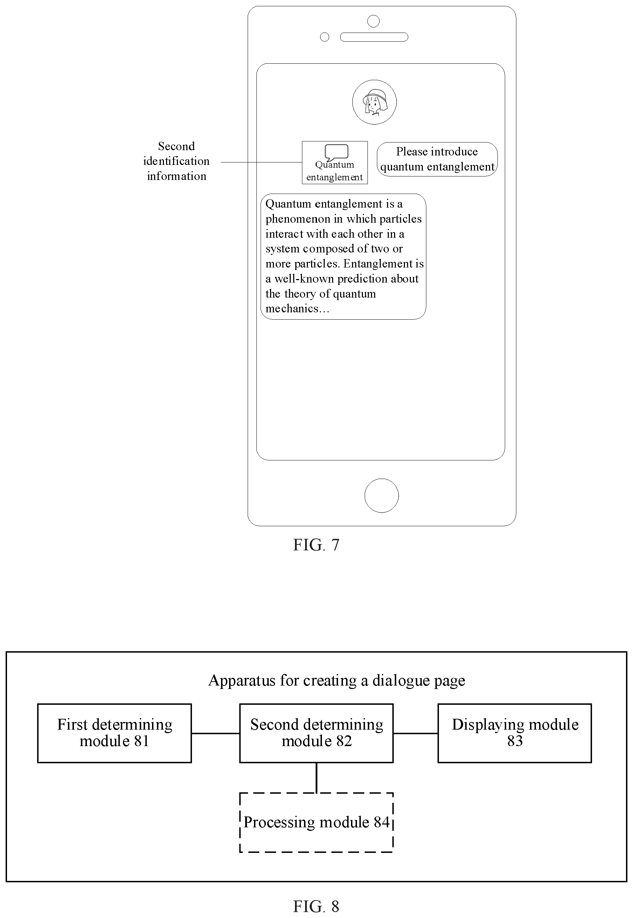

Exemplarily, referring to FIG. 7, it is a schematic diagram of displaying second identification information in a first dialogue page according to an embodiment of the present disclosure. For the first dialogue content selected in FIG. 3, the second page as shown in FIG. 5 is newly created specifically, and then in the first dialogue page shown in FIG. 7, the second identification information of the second dialogue page may be displayed in the display area that is associated with the originally selected first dialogue content. The second identification information may also be displayed in the form of an icon, and information such as the dialogue topic corresponding to the second dialogue page may be displayed.

In addition, in order to facilitate the user to switch from the first dialogue page to the second dialogue page associated with the selected first dialogue content, the second dialogue page may be jumped to and displayed in response to the trigger operation for the displayed second identification information. In this way, when the user browses the dialogue content in the first dialogue page, when a certain piece of dialogue content has been selected as the first dialogue content and the second dialogue page is created, the user may directly jump to the second dialogue page through the trigger operation associated with the displayed second identification information, that is, may continue to have a dialogue, and the operation is more convenient, without re-searching for a plurality of dialogue pages from the dialogue list page after exiting the first dialogue page.

It can be understood by those skilled in the art that in the above method of the specific implementation, the writing sequence of the steps does not mean a strict execution sequence to constitute any limitation on the implementation process, and the specific execution sequence of the steps should be determined according to their functions and possible internal logic.

Based on the equal inventive concept, the embodiments of the present disclosure further provide an apparatus for creating a dialogue page corresponding to the method for creating a dialogue page. Since the principle of solving problems by the apparatus in the embodiments of the present disclosure is similar to the method for creating a dialogue page in the embodiments of the present disclosure, the implementation of the apparatus may refer to the implementation of the method, and the repetitions will not be repeated.

Referring to FIG. 8, it is a schematic diagram of an apparatus for creating a dialogue page according to an embodiment of the present disclosure. The apparatus includes a first determining module 81, a second determining module 82, and a displaying module 83.

The first determining module 81 is configured to determine first dialogue content selected by the selection operation in response to the selection operation for dialogue content displayed in a first dialogue page.

The second determining module 82 is configured to determine a topic name corresponding to a to-be-created second dialogue page based on the first dialogue content in response to determining to create the dialogue page for the first dialogue content.

The displaying module 83 is configured to display the created second dialogue page, where the topic name is displayed in a topic display area of the second dialogue page.

In an optional implementation, the displaying module 83, when displaying the created second dialogue page, is configured to: display the first dialogue content in the second dialogue page; or display the first dialogue content and second dialogue content in the second dialogue page, where the second dialogue content is dialogue content, in each dialogue content in the first dialogue page, that is in a contextual association with the first dialogue content.

In an optional implementation, the second determining module 82, when determining the topic name corresponding to the to-be-created second dialogue page based on the first dialogue content, is configured to: determine, in each dialogue content in the first dialogue page, second dialogue content that is in the contextual association with the first dialogue content; and determine the topic name based on the first dialogue content and the second dialogue content.

In an optional implementation, the second determining module 82, when determining the topic name corresponding to the to-be-created second dialogue page based on the first dialogue content, is configured to: determine, in response to the first dialogue content including a plurality of the first dialogue contents, at least one candidate topic name based on a plurality of the first dialogue contents; determine whether the at least one candidate topic name belongs to a equal target vertical category, where the target vertical category includes at least one hierarchy indicating an inclusion relationship, and candidate topic names matching the respective hierarchies are different; and determine, in response to the at least one candidate topic name belonging to the equal target vertical category, a hierarchy matching respectively each of the candidate topic names under the target vertical category, and determine a target hierarchy based on each matched hierarchy, to determine the topic name based on a candidate topic name and/or a hierarchy name corresponding to the target hierarchy.

In an optional implementation, the second determining module 82 is further configured to: determine a plurality of vertical categories to which the at least one candidate topic name belongs and a content proportion corresponding to a candidate topic name under the each vertical category in response to the at least one candidate topic name not belonging to the equal target vertical category; and combine a vertical category name corresponding to the each vertical category based on the content proportion corresponding to the each vertical category, to obtain the topic name.

In an optional implementation, after creating the second dialogue page, the second determining module 82 is further configured to: display a dialogue thumbnail corresponding to the first dialogue page and a dialogue thumbnail corresponding to the second dialogue page in a dialogue list page, and display first identification information corresponding to the first dialogue page in the dialogue thumbnail corresponding to the second dialogue page.

In an optional implementation, the apparatus further includes a processing module 84, configured to: display second identification information of the second dialogue page in a display area, in the first dialogue page, that is associated with the first dialogue content; and jump to and display the second dialogue page in response to a trigger operation for the second identification information in the first dialogue page.

For descriptions of processing procedures of the respective modules in the apparatus and interaction procedures between the respective modules, reference may be made to the related descriptions in the above method embodiments, which will not be described in detail here.

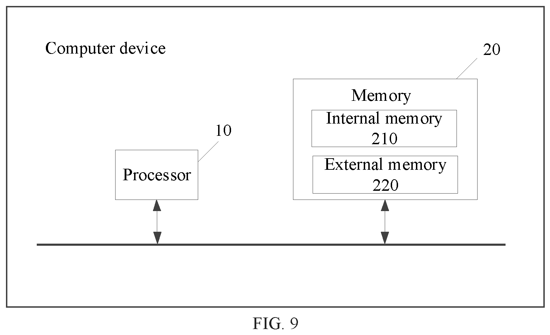

The embodiments of the present disclosure further provide a computer device. As shown in FIG. 9, it is a schematic diagram of a structure of a computer device provided in the embodiments of the present disclosure. The computer device includes:

a processor 10 and a memory 20, where the memory 20 is stored therein with machine-readable instructions executable by the processor 10, and the processor 10 is configured to execute the machine-readable instructions stored in the memory 20. When the machine-readable instructions are executed by the processor 10, the processor 10 executes the following steps:

determining first dialogue content selected by the selection operation in response to the selection operation for dialogue content displayed in a first dialogue page; determining a topic name corresponding to a to-be-created second dialogue page based on the first dialogue content in response to determining to create the dialogue page for the first dialogue content; and displaying the created second dialogue page, where the topic name is displayed in a topic display area of the second dialogue page.

The above memory 20 includes an internal memory 210 and an external memory 220. The internal memory 210 here is also referred to as an internal memory, and is configured to temporarily store operation data in the processor 10 and data exchanged with the external memory 220 such as a hard disk, and the processor 10 performs data exchange with the external memory 220 through the internal memory 210.

For the specific execution process of the above instructions, reference may be made to the steps of the method for creating a dialogue page described in the embodiments of the present disclosure, which will not be repeated here.

The embodiments of the present disclosure further provide a computer-readable storage medium, where the computer-readable storage medium is stored thereon with a computer program, and when the computer program is run by the processor, the steps of the method for creating a dialogue page described in the above method embodiments are executed. The storage medium may be a volatile or non-volatile computer-readable storage medium.

The embodiments of the present disclosure further provide a computer program product, where the computer program product carries program codes, and the instructions included in the program codes may be used to execute the steps of the method for creating a dialogue page described in the above method embodiments. Reference may be made to the above method embodiments specifically, which will not be repeated here.

The above computer program product may be implemented in a specific manner by hardware, software, or a combination thereof. In an optional embodiment, the computer program product is embodied as a computer storage medium, and in another optional embodiment, the computer program product is embodied as a software product, such as a software development kit (Software Development Kit, SDK), etc.

It can be clearly understood by those skilled in the art that for the convenience and conciseness of description, for the specific working process of the system and the apparatus described above, reference may be made to the corresponding process in the foregoing method embodiments, and details will not be repeated here. In the several embodiments provided in the present disclosure, it should be understood that the disclosed system, apparatus, and method may be implemented in other manners. The apparatus embodiments described above are merely illustrative. For example, the division of the units is merely a logical function division, and in actual implementation, there may be other division manners. For another example, a plurality of units or components may be combined or integrated into another system, or some features may be ignored or not performed. In another point, the mutual coupling or direct coupling or communication connection shown or discussed may be through some communication interfaces, and the indirect coupling or communication connection of the apparatus or units may be electrical, mechanical, or other forms.

The unit described as a separate part may be or may not be physically separated, and the part displayed as a unit may be or may not be a physical unit, that is, it may be located in one place or may be distributed to a plurality of network units. Some or all of the units may be selected according to actual needs to achieve the purpose of the solutions of the embodiments.

In addition, the functional units in the respective embodiments of the present disclosure may be integrated into one processing unit, or each unit may exist physically alone, or two or more units may be integrated into one unit.

When the functions are implemented in the form of software functional units and sold or used as independent products, the functions may be stored in a non-volatile computer-readable storage medium executable by a processor. Based on such understanding, the technical solutions of the present disclosure may be embodied in the form of a software product in nature, and the computer software product is stored in a storage medium and includes a plurality of instructions for causing a computer device (which may be a personal computer, a server, or a network device, etc.) to execute all or part of the steps of the method described in the respective embodiments of the present disclosure. The aforementioned storage medium includes various media that can store program codes, such as a USB flash drive, a mobile hard disk, a read-only memory (Read-Only Memory, ROM), a random access memory (Random Access Memory, RAM), a magnetic disk, or an optical disk.

Finally, it should be noted that the above embodiments are merely specific implementations of the present disclosure, and are used to illustrate the technical solutions of the present disclosure, but not to limit them. The protection scope of the present disclosure is not limited thereto. Although the present disclosure has been described in detail with reference to the foregoing embodiments, those of ordinary skill in the art should understand that any person skilled in the art can still modify the technical solutions described in the foregoing embodiments or make changes thereto without creative efforts, or make equivalent substitutions for some technical features thereof; and these modifications, changes, or substitutions do not make the essence of the corresponding technical solutions depart from the spirit and scope of the technical solutions of the embodiments of the present disclosure, and should be covered by the protection scope of the present disclosure. Therefore, the protection scope of the present disclosure should be subject to the protection scope of the claims.

## Claims

1. A method for creating a dialogue page, comprising:
determining, in response to a selection operation for a dialogue content displayed in a first dialogue page, first dialogue content selected by the selection operation;
determining, based on the first dialogue content, a topic name corresponding to a to-be-created second dialogue page, in response to determining to create the dialogue page for the first dialogue content; and
displaying the created second dialogue page, wherein the topic name is displayed in a topic display area of the second dialogue page.

2. The method for creating a dialogue page according to claim 1, wherein the displaying the created second dialogue page, comprises:
displaying the first dialogue content in the second dialogue page; or,
displaying the first dialogue content and a second dialogue content in the second dialogue page, wherein the second dialogue content is dialogue content that is in a contextual association with the first dialogue content, in each dialogue content in the first dialogue page.

3. The method for creating a dialogue page according to claim 1, wherein the determining, based on the first dialogue content, a topic name corresponding to a to-be-created second dialogue page, comprises:
determining, in each dialogue content in the first dialogue page, a second dialogue content that is in a contextual association with the first dialogue content; and
determining the topic name based on the first dialogue content and the second dialogue content.

4. The method for creating a dialogue page according to claim 1, wherein the determining, based on the first dialogue content, a topic name corresponding to a to-be-created second dialogue page, comprises:
determining, in response to the first dialogue content comprising a plurality of first dialogue contents, at least one candidate topic name based on the plurality of the first dialogue contents;
determining whether the at least one candidate topic name belongs to an equal target vertical category, wherein the target vertical category comprises at least one hierarchy indicating an inclusion relationship, and candidate topic names matching respective hierarchies are different; and
determining, in response to the at least one candidate topic name belonging to the equal target vertical category, a hierarchy matching respectively each of the candidate topic names under the target vertical category, and determining a target hierarchy based on each matched hierarchy, to determine the topic name based on a candidate topic name and/or a hierarchy name corresponding to the target hierarchy.

5. The method for creating a dialogue page according to claim 4, further comprising:
determining, in response to the at least one candidate topic name not belonging to the equal target vertical category, a plurality of vertical categories to which the at least one candidate topic name belongs and a content proportion corresponding to a candidate topic name under each vertical category; and
combining a vertical category name corresponding to the each vertical category based on the content proportion corresponding to the each vertical category, to obtain the topic name.

6. The method for creating a dialogue page according to any one of claims 1 to 5, wherein after creating the second dialogue page, the method for creating further comprises:
displaying a dialogue thumbnail corresponding to the first dialogue page and a dialogue thumbnail corresponding to the second dialogue page in a dialogue list page, and displaying first identification information corresponding to the first dialogue page in the dialogue thumbnail corresponding to the second dialogue page.

7. The method for creating a dialogue page according to any one of claims 1 to 6, further comprising:
displaying second identification information of the second dialogue page in a display area that is associated with the first dialogue content in the first dialogue page; and
jumping to and displaying the second dialogue page in response to a trigger operation for the second identification information in the first dialogue page.

8. An apparatus for creating a dialogue page, comprising:
a first determining module, configured to determine, in response to a selection operation for a dialogue content displayed in a first dialogue page, first dialogue content selected by the selection operation;
a second determining module, configured to determine, based on the first dialogue content, a topic name corresponding to a to-be-created second dialogue page, in response to determining to create the dialogue page for the first dialogue content; and
a displaying module, configured to display the created second dialogue page, wherein the topic name is displayed in a topic display area of the second dialogue page.

9. A computer device, comprising: a processor and a memory, wherein the memory stores machine-readable instructions executable by the processor, the processor is configured to execute the machine-readable instructions stored in the memory, and when the machine-readable instructions are executed by the processor, the processor executes the method for creating a dialogue page according to any one of claims 1 to 7.

10. A computer-readable storage medium, wherein the computer-readable storage medium is stored thereon with a computer program, and when the computer program is run by a computer device, the computer device executes the method for creating a dialogue page according to any one of claims 1 to 7.
